# EUROPEAN PATENT SPECIFICATION

(11) **EP 0 685 639 B1**
(45) Date of publication and mention of the grant of the patent: **10.09.1997**
(21) Application number: 95830234.1
(22) Date of filing: 02.06.1995
(51) Int. Cl.: F02M 21/02

(54) **Electronically controlled pressure regulator device for internal combustion engines supplied with a gaseous fuel, particularly methane**
Elektronisch gesteuerter Druckregler für mit gasförmigem Brennstoff insbesondere Methan, versorgter Brennkraftmaschine
Régulateur de pression à commande électronique pour moteur à combustion interne alimenté en carburant gazeux, plus particulièrement en méthane

(30) Priority: 03.06.1994 IT TO940459
(43) Date of publication of application: 06.12.1995
(73) Proprietor: C.R.F. Societa' Consortile per Azioni, 10043 Orbassano (Torino) (IT)
(72) Inventor: Conti, Luigi, I-10126 Torino (IT)
(74) Representative: Notaro, Giancarlo

(56) References cited:
- EP-A- 0 077 286
- EP-A- 0 420 599
- US-A- 4 188 919
- PATENT ABSTRACTS OF JAPAN vol. 016 no. 311 (M-1277) ,8 July 1992 & JP-A-04 086362 (NIPPON CARBURETER CO LTD) 18 March 1992,
- PATENT ABSTRACTS OF JAPAN vol. 013 no. 100 (M-805) ,9 March 1989 & JP-A-63 289250 (NIPPON CARBURETER CO LTD) 25 November 1988,
- PATENT ABSTRACTS OF JAPAN vol. 012 no. 260 (M-720) ,21 July 1988 & JP-A-63 041651 (TOYOTA MOTOR CORP) 22 February 1988,
- PATENT ABSTRACTS OF JAPAN vol. 013 no. 282 (M-843) ,28 June 1989 & JP-A-01 077742 (NIPPON CARBURETER CO LTD) 23 March 1989,
- PATENT ABSTRACTS OF JAPAN vol. 013 no. 300 (M-848) ,11 July 1989 & JP-A-01 092562 (NIPPON CARBURETER CO LTD) 11 April 1989,

## Description

The present invention relates to an electronically controlled pressure regulator device for internal combustion engines supplied with a gaseous fuel, particularly methane.

In internal combustion engines of this type, the gaseous fuel is fed to the engine either at atmospheric pressure by means of a choke device substantially similar to a carburator of a gasoline engine, or at a pressure of about 7 bar by means of one or more injector devices. The gas fed to the choke device or to the injectors comes from a tank where it is stored at a high pressure (such as about 200 bar) through a pressure regulator device which has the function of bringing the gas pressure from the level present in the tank to the level for feeding the choke device or the injectors.

According to the conventional technique, this pressure regulating device comprises a modulating valve controlled by a diaphragm device responsive to the vacuum in the engine intake manifold.

The main drawback of this known art lies in that the gas feeding pressure becomes subject to pulses, essentially because of the inertia of the movable parts of the pressure regulator device (diaphragm, springs and control levers) which prevents a prompt adaptation to the engine transient conditions. Also the vehicle accelerations often cause detrimental consequences on the pressure regulation.

A regulator device as indicated in the pre-characterizing portion of Claim 1 is known from JP-A-04 086 362, and has the drawback that the decrease of the gas temperature due to the expansion in the device may cause irregular operation of the choke device or the injectors and condensation of the vapour present within the gas.

The object of the present invention is that of providing a pressure regulator device for internal combustion engines supplied with a gaseous fuel, particularly methane, which is able to overcome the above mentioned drawback.

In view of achieving this object, the pressure regulator device according to the invention is characterized by the features set forth in Claim 1.

In one embodiment the heating body is comprised of a metal body having an inner passage interconnected within the engine coolant circuit. The heated liquid coming out of the engine is fed to this inner passage so as to keep the heating body at a relatively high temperature.

The aforesaid pressure modulating solenoid valve may be of any type (duty-cycle valve, on-off valve, proportional valve) and is driven by said control electronic means which if desired can be constituted by the conventional electronic control unit which is associated to the internal combustion engine with fuel injection.

The invention is applicable to the fuel supply of any type of engine, either of the two-stroke or four-stroke type, and to any fuel feeding system, i.e. either a feeding system with choke device, or with a single injector arranged in the intake manifold or with a plurality of injectors associated to the various intake conduits of the engine cylinders or directly to the combustion chambers of the cylinders.

The device according to the invention is substantially different from the prior art since it has no moving parts and can be controlled by said electronic control means so as to provide the gas feeding system with advantages in terms of prompt reactions and precise metering.

Further features and advantages of the invention will become apparent from the description which follows with reference to the annexed drawing, given purely by way of non limiting example, which shows a diagrammatic view, partially in cross section, of the device according to the invention.

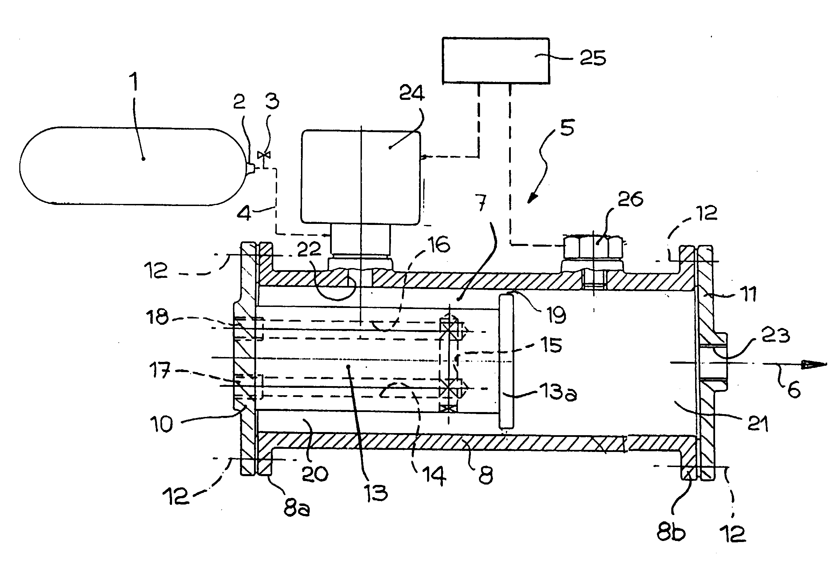

With reference to the drawing, reference numeral 1 designates a high pressure (200 bar) methane tank, whose output 2 can be connected by a cock 3 and a line 4 to a pressure regulator device 5 according to the invention having an output 6 connected to a system for feeding methane to an internal combustion engine (not shown). As already indicated, the feeding system may be of any known type, e.g. with a choke device, in which the methane is fed at atmospheric pressure, or with one or more injectors, in which case the feeding pressure of the methane is about 7 bar.

The pressure regulator device 5 has the purpose of bringing the pressure of methane from the high value at which the methane is stored within tank 1 to the value of the feeding pressure, while avoiding pulses of this feeding pressure which take place with the known devices.

The pressure regulator device has a substantially cylindrical body 7 comprising a tubular element 8 having an inner cylindrical cavity 9 closed at its ends by two lids 10, 11 screwed to end flanges 8a, 8b of the tubular body 8 by screws of which only the axes 12 are shown.

The end lid 10 supports in a cantilever fashion within cavity 9 a heating body 13, of substantially cylindrical form, having a diameter lower than the diameter of cavity 9. The heating body 13 has an inner passage defined by holes 10, 15, 16 having its ends communicating respectively with an inlet aperture 17 and an outlet aperture 18 for the engine coolant. This liquid comes to the inlet aperture 17 after having cooled the engine and hence at a relatively high temperature, and comes out from aperture 18 to come back to the engine so as to keep the heating body 13 at a relatively high temperature. This body has at its end opposite to lid 10 an enlarged head 13a which defines a restricted annular passage 19 along with the wall of cavity 9. The restricted passage 19 communicates a first chamber 20, constituted by the annular space between the heating body 13 and the wall of cavity 9, with a second chamber 21, constituted by the remaining part of cavity 9.

The body 7 of the pressure regulator device has a first aperture 22 formed in the wall of the tubular body 8, for communicating the chamber 20 to the high pressure gas tank 1 and a second aperture 23, for communicating the chamber 21 to the line 7 for feeding the gas to the engine. On the tubular element 8 there is mounted the body of a pressure modulating solenoid valve 24 which is interposed in the connection between aperture 22 and line 4 coming from the high pressure gas tank 1. Solenoid valve 24 may be of any type (duty-cycle, on-off, proportional) and is driven by an electronic control unit 25, according to a feedback loop logic, as a function of the signal coming from a sensor 26 of the pressure within chamber 21 in order to keep the pressure in chamber 21 at a constant predetermined level (for example at atmospheric pressure, or at a pressure of 7 bar).

In operation, the gas coming from the high pressure tank 1 comes through line 4 to the solenoid valve 24 which controls the gas flow towards aperture 22 and from the latter through chamber 20, the annular restricted passage 19 and chamber 21, to the outlet aperture 23 from which the gas may arrive at line 6 connected to the system for feeding gas to the engine.

The cooling to which the gas will be subject as a result of its expanding through solenoid valve 24 is opposed by heating body 13, which exploits the heat of the engine coolant.

As already indicated, the device according to the invention efficiently solves the problem of eliminating the pressure pulses within the gas fed to the engine, the problem of its decrease of temperature as a result of the expansion to which it is subject in order to go from the high pressure of storage within tank 1 to the pressure of use, the whole with a relatively simple and inexpensive structure.

The association of solenoid valve 24 to an electronic control operating in a loop with the pressure sensor 26 ensures efficiency of the device. Solenoid valve 24 may be associated to further sensors used in the control strategy of the engine.

## Claims

1. A pressure regulator device for internal combustion engines supplied with a gaseous fuel, particularly methane, comprising:
a hollow body (7) including a first and a second chamber (20, 21) communicating with each other through a restricted passage (19) and having a first aperture (22) for communication of the first chamber (20) with a high pressure gas tank (1) and a second aperture (23) for communication of the second chamber (21) with the system for feeding gas to the engine,
pressure sensor means (26) associated to said second chamber (21) for detecting the pressure within the latter,
a pressure modulating solenoid valve (24), and
electronic control means (25) for driving said pressure modulating solenoid valve (24), with a feedback loop logic, as a function of the signal coming out of said pressure sensor means (26), and any further signal representative of the engine operating conditions, to cause the gas coming out of said second aperture (23) to be at a predetermined pressure lower than the pressure of said tank and substantially free from pulses,
characterized in that said pressure modulating solenoid valve (24) is interposed in the communication between said first aperture (22) and said high pressure gas tank, and in that within said first chamber (20) there is arranged a heating body (13), which
is arranged coaxially within the cavity (9) of said hollow body of the regulator device (7) and has an enlarged end head (13a) defining together with the wall (9) of said cavity (9), the restricted annular passage (19) which separates the annular space defined between the heating body (13) and the wall of said cavity (9), constituting said first chamber (20), from the remaining part of the cavity (9), constituting said second chamber (21)-.

2. Regulator device according to claim 1, characterized in that said heating body (13) is constituted by a metal body having an inner passage (14, 15, 16) interconnected within the engine coolant circuit.

3. Regulator device according to claim 2, characterized in that said body (7) of the regulator device (5) comprises a tubular element (8) provided with two end lids (10, 11) to one of which (10) there is fixed in a cantilever fashion said heating body (13), the opposite lid (11) having said second aperture (23), and said first aperture (22) being formed in the wall of said tubular element (8).

## Patentansprüche

1. Eine Druckregelungsvorrichtung für Verbrennungsmotoren, die mit gasförmigem Kraftstoff, insbesondere Methan, versorgt werden, mit;
einem Hohlkörper (7) mit einer ersten und einer zweiten Kammer (20, 21), die miteinander über eine eingeschnürte Verbindung (19) miteinander in Verbindung stehen, und mit einer ersten Öffnung (22) zur Verbindung der ersten Kammer (20) mit einem Hocbdruckgastank (1) und einer zweiten Öffnung (23) zur Verbindung der zweiten Kammer (21) mit dem System zur Gaszuführung zu dem Motor,
einem Drucksensormittel (26), das mit der zweiten Kammer (21) in Beziehung steht, zum Detektieren des Drucks in der zweiten Kammer,
einem Druckmodulationsmagnetventil (24), und
einem elektronischen Steuermittel (25) mit einer Rückkopplungsschleifenlogik zum Ansteuern des Druckmodulationsmagnetventils (24) als Funktion des aus dem Drucksensormittel (26) herauskommenden Signals und von jeglichem anderem Signal, das für die Motorbetriebsbedingungen repräsentativ ist, um zu bewirken, daß das aus der zweiten Öffnung (23) herauskommendes Gas bei einem vorbestimmten Druck niedriger als der Druck des Tanks und im wesentlichen frei von Pulsen ist,
dadurch gekennzeichnet, daß das Druckmodulationsmagnetventil (24) in der Verbindung zwischen der ersten Öffnung (22) und dem Hochdruckgastank eingefügt ist, und daß in der ersten Kammer (20) ein Heizkörper (13) angeordnet ist, der koaxial in dem Hohlraum (9) des Hohlkörpers der Regelungsvorrichtung (7) angeordnet ist und einen vergrößerten Endkopf (13a) aufweist, der zusammen mit der Wand (9) des Hohlraums (9) die eingeschnürte ringförmige Verbindung (19) bestimmt, die den ringförmigen Raum, der zwischen dem Heizkörper (13) und der Wand des Hohlraums (9) bestimmt ist und der die erste Kammer (20) bildet, von dem verbleibenden Teil des Hohlraums (9), der die zweite Kammer (21) bildet, trennt.

2. Regelungsvorrichtung gemäß Anspruch 1, dadurch gekennzeichnet, daß der Heizkörper (13) durch einen Metallkörper mit einem inneren Durchgang (14, 15, 16), der mit dem Motorkühlkreislauf verbunden ist, gebildet ist.

3. Regelungsvorrichtung gemäß Anspruch 2, dadurch gekennzeichnet, daß der Körper (7) der Regelungsvorrichtung (5) ein rohrförmiges Element (8) umfaßt, das mit zwei Endabdeckungen (10, 11) versehen ist, wobei an einer davon (10) der Heizkörper (13) freitragend einseitig befestigt ist, wobei die gegenüberliegende Abdeckung (11) die zweite Öffnung (23) aufweist, und wobei die erste Öffnung (22) in der Wand des rohrförmigen Elements (8) ausgebildet ist.

## Revendications

1. Dispositif de régulation de pression pour moteur à combustion interne alimenté avec un carburant gazeux, en particulier du méthane, comprenant:
- un corps creux (7) qui inclut une première et une seconde chambre (20, 21) qui communiquent l'une avec l'autre via un passage à restriction (19) et ayant une première ouverture (92) pour la communication de la première chambre (20) avec un réservoir de gaz sous haute pression (1), et une seconde ouverture (23) pour la communication de la seconde chambre (21) avec le système pour alimenter le gaz au moteur,
- des moyens formant capteur de pression (26) associés à ladite seconde chambre (21) pour détecter la pression à l'intérieur de cette dernière,
- une valve solénoïde de modulation de pression (24), et
- des moyens de commande électroniques (25) pour piloter ladite valve solénoïde de modulation de pression (24), avec une logique à boucle de rétroaction, en fonction du signal provenant desdits moyens formant capteur de pression (26), et de tout autre signal représentatif des conditions de fonctionnement du moteur, pour amener le gaz provenant de ladite seconde ouverture (23) à être à une pression prédéterminée inférieure à la pression dudit réservoir et sensiblement exempte d'impulsion,
caractérisé en ce que ladite valve solénoïde de modulation de pression (24) est interposée dans la communication entre ladite première ouverture (22) et ledit réservoir de gaz sous haute pression, et en ce qu'à l'intérieur de ladite première chambre (20) est agencé un corps chauffant (13), qui est agencé coaxialement à l'intérieur de la cavité (9) dudit corps creux du dispositif de régulation (7) et présente une tête d'extrémité agrandie (13a) qui définit ensemble avec la paroi (9) de ladite cavité (9) le passage annulaire à restriction (19) qui sépare l'espace annulaire défini entre le corps chauffant (13) et la paroi de ladite cavité (9), constituant ladite première chambre (20), depuis la partie restante de la cavité (9), constituant ladite seconde chambre (21).

2. Dispositif de régulation selon la revendication 1, caractérisé en ce que ledit corps chauffant (13) est constitué d'un corps métallique ayant un passage intérieur (14, 15, 16) interconnecté avec le circuit de refroidissement du moteur.

3. Dispositif de régulation selon la revendication 2, caractérisé en ce que ledit corps (7) du dispositif de régulation (5) comprend un élément tubulaire (8) pourvu de deux capuchons d'extrémité (10, 11), et sur l'un de ces capuchons (10) est fixé en porte-à-faux ledit corps chauffant (13), tandis que le capuchon opposé (11) comporte ladite seconde ouverture (23), et ladite première ouverture (22) étant formée dans la paroi dudit élément tubulaire (8).
